(19) Europäisches Patentamt
European Patent Office
Office européen des brevets

(11) **EP 1 390 189 B1**

(12) **EUROPÄISCHE PATENTSCHRIFT**

(45) Veröffentlichungstag und Bekanntmachung des Hinweises auf die Patenterteilung:
**14.02.2007 Patentblatt 2007/07**

(51) Int Cl.:
**B29C 47/40** *(2006.01)*    **B29B 7/48** *(2006.01)*
**B01F 7/08** *(2006.01)*

(21) Anmeldenummer: **02769143.5**

(22) Anmeldetag: **08.05.2002**

(86) Internationale Anmeldenummer:
**PCT/EP2002/005100**

(87) Internationale Veröffentlichungsnummer:
**WO 2002/090087 (14.11.2002 Gazette 2002/46)**

(54) **VORRICHTUNG MIT SCHNECKEN ZUM HOMOGENISIEREN UND/ODER DISPERGIEREN**

HOMOGENIZING AND/OR DISPERSING DEVICE COMPRISING ENDLESS SCREWS

DISPOSITIF COMPORTANT DES VIS SANS FIN DESTINE A L'HOMOGENEISATION ET/OU A LA DISPERSION

(84) Benannte Vertragsstaaten:
**AT BE CH CY DE DK ES FI FR GB GR IE IT LI LU MC NL PT SE TR**

(30) Priorität: **09.05.2001 DE 10122462**

(43) Veröffentlichungstag der Anmeldung:
**25.02.2004 Patentblatt 2004/09**

(73) Patentinhaber: **3+Extruder GmbH**
**74348 Lauffen (DE)**

(72) Erfinder:
• **BLACH, Josef, A.**
**74348 Lauffen (DE)**
• **BLACH, Markus**
**74348 Lauffen (DE)**
• **BLACH, Michael**
**74348 Lauffen (DE)**

(74) Vertreter: **Berngruber, Otto et al**
**Patentanwälte**
**Haft, von Puttkamer**
**Berngruber, Karakatsanis**
**Franziskanerstrasse 38**
**81669 München (DE)**

(56) Entgegenhaltungen:
EP-A- 0 002 131    EP-A- 0 788 867
DE-A- 19 607 663   DE-A- 19 854 689
US-A- 5 393 140    US-B1- 6 190 031

**Beschreibung**

Die Erfindung bezieht sich auf eine Vorrichtung zum Homogenisieren und/oder Dispergieren wenigstens eines viskosen Stoffes und wenigstens eines Feststoffes und/oder wenigstens eines anderen Stoffes unterschiedlicher Viskosität nach dem Oberbegriff des Anspruchs 1.

Schneckenextruder haben den Nachteil, dass beim Homogenisieren, Kneten und Dispergieren von Feststoffen in einer viskosen Matrix oder Homogenisieren von Stoffen sehr unterschiedlicher Viskosität häufig schlechtere qualitative Ergebnisse erzielt werden als mit chargenweisem Kneten. Dies trifft auch für Doppelschneckenextruder zu. Um das Homogenisieren zu verbessern, werden auf den beiden Wellen von Doppelschneckenextrudern daher im allgemeinen neben Schneckenelementen sogenannte Knetblöcke drehfest angeordnet, die aus zwei oder mehr in Umfangsrichtung gegeneinander im Winkel versetzten Kurvenscheiben bestehen, deren Umriss jeweils aus mehreren Kreisbögen gebildet ist. Derartige Knetblöcke sind beispielsweise in DE 813 154 B und EP 0 422 272 B1 beschrieben.

Ferner ist aus EP 0 788 867 B1 eine Vorrichtung zum kontinuierlichen Bearbeiten von fließfähigen Materialien gemäß dem Oberbegriff des Anspruchs 1 bekannt. Auch bei dieser Vorrichtung erfolgt das Homogenisieren im wesentlichen durch derartige Knetblöcke. Knetblöcke haben jedoch den Nachteil, dass in der tiefen Gangmitte nur geringe Energien, in dem keilförmig zum Gehäuse auslaufenden Gang jedoch sehr hohe Energien in das zu bearbeitende Produkt geleitet werden, was, abgesehen von einem spezifisch hohen Energieverbrauch, zu einer partiellen Überbeanspruchung des Produkts und einem hohem Verschleiß im Bereich der Knetblöcke und des Gehäuses führen kann. Zudem können durch die axial offene Bauweise der Knetblöcke Produktanteile leicht auf kurzem Weg und ohne Energieeintrag, also ohne Homogenisierung durch die Knetblöcke hindurchtreten.

Eine weitere Vorrichtung dieser Art ist aus der US-B1-6190031 bekannt.

Aus DE 28 54 207 B2 ist ein Schneckenextruder bekannt, der eine Mischzone mit einer Länge von 4 - 12 D (D = Außendurchmesser eines Schneckenelements) aufweist, wobei die Gangsteigungen zwischen 0,5 bis 2 D in der Eintragszone bzw. 0,3 - 1 D in der Austragszone betragen.

Aufgabe der Erfindung ist es, die Anforderungen an die Auslegung einer gattungsgemäßen Vorrichtung für ein einwandfreies Homogenisieren und/oder Dispergieren anzugeben.

Dies wird erfindungsgemäß durch die im Anspruch 1 gekennzeichnete Vorrichtung erreicht. In den Unteransprüchen sind vorteilhafte Ausgestaltungen der Erfindung wiedergegeben.

Die erfindungsgemäße Vorrichtung weist in einem Raum zwischen einem Gehäuse und einem Innenkern längs eines Kreises mit gleichen Zentriwinkelabstand mindestens drei achsparallel rotierbare Wellen auf, die zumindest teilweise mit dicht kämmend ineinandergreifenden Schneckenelementen versehen sind. Das Gehäuse ist an seiner Innenseite und der Innenkern auf seiner Außenseite mit achsparallelen konkaven Kreissegmenten versehen, die die jeweilige Welle mit den Schneckenelementen aufnehmen.

Der Kreis, auf dem die Wellen angeordnet sind, ist ein Kreisbogen oder kann ein voller Kreis sein, der Verfahrensraum kann sich also um den Kreisbogen anordnen oder ist ringförmig. Das Gehäuse und/oder der Innenkern sind mit Öffnungen versehen, beispielsweise Materialzufuhröffnungen und/oder Material- und/oder Gasaustrittsöffnungen.

Da die Schneckenelemente bei einer solchen Vorrichtung in dem Bereich, in dem das Gehäuse und/oder der Innenkern Öffnungen aufweist, eine deutlich herabgesetzte homogenisierende bzw. dispergierende Wirkung besitzen, muss erfindungsgemäß der Axialbereich, der außerhalb dieser Öffnungen liegt, eine Länge aufweisen, die mindestens dem Zehnfachen, vorzugsweise dem Fünfzehnfachen des Außendurchmessers der Schneckenelemente entspricht.

Auch bezieht sich diese Länge nur auf den Bereich in dem der viskose Stoff 100% aufgeschmolzen bzw. flüssig vorliegt. Das heißt; dass die zum Aufschmelzen nötige Schneckenlänge nicht zum erfindungsgemäßen Verfahrensteil zählt.

Gleiches gilt, wenn Stoffe unterschiedlicher Viskosität mit der erfindungsgemäßen Vorrichtung homogenisiert werden und wenigstens einer dieser Stoffe in der Vorrichtung erst aufgeschmolzen werden muss. Auch dann muss die Länge der Schneckenelemente auf den Wellen außerhalb der Öffnungen, die im Gehäuse und/oder in dem Innenkern vorgesehen sind, mindestens das Zehnfache, vorzugsweise das Fünfzehnfache des Schneckenaußendurchmessers betragen, und zwar in dem Bereich, in dem alle Stoffe flüssig bzw. aufgeschmolzen sind.

Die Länge, in der der Feststoffanteil in dem flüssigen, also ggf. aufgeschmolzenen Stoff bzw. bei einer Homogenisierung von Stoffen unterschiedlicher Viskosität sämtliche zu homogenisierende Stoffe in flüssigem, also ggf. aufgeschmolzenem Zustand in der Vorrichtung vorliegen und die außerhalb der besagten Öffnungen liegt, kann auch als Verfahrenslänge bezeichnet werden. Das heißt, erfindungsgemäß sind die Wellen über eine Verfahrenslänge, die mindestens dem Zehnfachen, vorzugsweise mindestens dem Fünfzehnfachen des Schneckenau-ßendurchmessers entspricht, mit Schneckenelementen versehen.

Zudem besitzen die Schneckenelemente, aus denen sich die Verfahrenslänge zusammensetzt, um die gewünschte Dispergierung und Homogenisierung zu erreichen, über eine Länge, die wenigstens dem Dreifachen, vorzugsweise wenigstens dem Fünffachen des Schneckenaußendurchmessers entspricht, eine Gangsteigung von höchstens drei Viertel, vorzugsweise von höchstens zwei Drittel und besonders bevorzugt von höchstens der Hälfte des Schneckenaußendurchmessers.

Wenn diese Bedingungen erfüllt sind, lassen sich mit der erfindungsgemäßen Vorrichtung kontinuierlich Feststoffe in einer viskosen Matrix mit einem so hervorragendem Ergebnis dispergieren bzw. homogenisieren, wie es bisher nur chargenweise mit Knetern erreicht werden konnte. Gleiches gilt für das Homogenisieren von Stoffen unterschiedlicher Viskosität.

Unter diesen Bedingungen wird nämlich die Zahl der Zonen, in denen benachbarte Schneckenelemente ineinander greifen, d.h. die Stege oder Kämme benachbarter Schneckenelemente einander überlappen, vervielfacht.

Bei einem Zweischneckenextruder beträgt an einem Gehäusequerschnitt die Zahl der Übergänge, an denen sich die konkaven Kreissegmente an der einen und der anderen Seite des Gehäuses schneiden, insgesamt zwei, bei einer Vorrichtung gemäß EP 0 788 867 B1 mit drei Wellen ist die Zahl der Übergänge, an denen sich die konkaven Kreissegmente an der Innenseite des Gehäuses und an der Außenseite des Innenkerns schneiden, insgesamt vier und bei zwölf Wellen im geschlossenen Kreis insgesamt vierundzwanzig.

Rein mechanisch betrachtet, werden bei einer Schneckenumdrehung mit den 12 Wellen 24 Zwickel passiert und bei der Doppelschnecke sind es 2. Werden je 20 Windungen mit Steigung = 1 x Durchmesser auf die Verfahrensteillänge von 20 $\varnothing$ angeordnet, steigt die Zahl der Passagen je Umdrehung bei 12 Wellen auf 20 x 24 = 480 und bei einer Doppelschnecke auf 2 x 20 = 40.

Bei einer 3-Wellen-Maschine sind gleichzeitig 4 Zwickel wirksam, das bedeutet, dass je Schneckenumdrehung 4 Zwickel wirksam werden, was bei 20 Windungen 80 Zwickelpassagen sind. Analog ergeben sich bei kleineren Steigungen für eine:

| Doppelschnecke Steigung 3/4 $\varnothing$ | 53,3 Zwickelpassagen |
|---|---|
| 3 Wellen | 106,7 Zwickelpassagen |
| 12 Wellen | 640 Zwickelpassagen |

| Doppelschnecke bei Steigung 2/3 $\varnothing$ | 60 Zwickelpassagen |
|---|---|
| 3 Wellen | 120 Zwickelpassagen |
| 12 Wellen | 720 Zwickelpassagen |

| Doppelschnecke bei Steigung 1/2 $\varnothing$ | 80 Zwickelpassagen |
|---|---|
| 3 Wellen | 160 Zwickelpassagen |
| 12 Wellen | 960 Zwickelpassagen |

wobei $\varnothing$ der Schneckenaußendurchmesser ist.

Die Wirkung der Ineinandergreifzonen auf das Dispergieren und Homogenisieren eines oder mehrerer Feststoffe bzw. der anderen Stoffanteile in einer viskosen Matrix beruht im wesentlichen darauf, dass beim Durchströmen des Materials durch die Ineinandergreifzone der bremsende Einfluss des Gehäuses im wesentlichen entfällt, was gleichzeitig mit einer Vergrößerung der Materialgeschwindigkeiten verbunden ist, und eine Dehnung des beteiligten Materials zur Folge hat. Weiter wird beim Auftreffen des Materials auf den Außendurchmesser des Kammes der aufnehmenden Schnecke, der mit Umfangsgeschwindigkeit rotiert, ähnlich wie beim Pflügen, das Material von der Schneckenoberfläche der abgegebenen Schnecke abgetragen, umgeschichtet und mit einer neuen Fließrichtung in den verengten Querschnitt der aufnehmenden Schnecke gelenkt. Über die Viskosität der kontinuierlichen Phase werden dadurch Zug- und Biegekräfte auf die benetzten Feststoffagglomerate ausgeübt, zu deren Bruch es dann kommen kann. Da die Höhe der Beanspruchung durch die Viskosität begrenzt ist, muss mit der Passage vielfach hintereinander angeordneter Ineinandergreifzonen über die Dauer der Beanspruchung der einzelne Bruch und/oder der wiederholte Bruch erfolgen. Auf die Umfangslänge von Ineinandergreifzone zu Ineinandergreifzone wirken die Schnecken als reines Förder- und Druckaufbausystem, wie bei einem herkömmlichen Einwellenextruder.

Dass diese Vorgänge eine wesentliche Rolle für die Homogenisierung und Dispergierung des Feststoffes bilden, ist daraus zu schließen, dass mit der erfindungsgemäßen Vorrichtung selbst bei Feststoffteilchen mit einer Teilchengröße im $\mu$m-Bereich in einer viskosen Matrix eine einwandfreie Dispergierung und Homogensierung erreicht wird, die der chargenweisen Dispergierung und Homogenisierung in einem Kneter nicht nachsteht.

Das gleiche Resultat lässt sich beim Homogenisieren von Stoffen unterschiedlicher Viskosität durch die erfindungsgemäße Vorrichtung erzielen.

Die Schnecken der erfindungsgemäßen Vorrichtung sind vorzugsweise ein- oder zweigängig ausgeführt. Eingängige Schneckenelemente werden besonders bevorzugt, weil die Kammbreite groß gegenüber der Gangbreite gewählt werden kann, also eine hohe Querschnittsverengung des Schneckenkanals zu erhalten ist.

Das Schneckenprofil der erfindungsgemäßen Vorrichtung besteht vorzugsweise aus mehreren Kreisbögen. Wobei außen und innen der jeweilige Radius die Krümmung darstellt und für die Flanken dazwischen der Achsabstand als Radius die maximale Krümmung bestimmt.

$$Ax = D/2+d/2$$

Ax    Achsabstand von 2 Schnecken
D     Außendurchmesser
d     Kerndurchmesser

$$GZ(2alfa+beta+gamma) = 360°$$

GZ      Gangzahl
alfa    Flankenwinkel
beta    Kernwinkel
gamma   Kammwinkel

Bei standardmäßiger Auslegung wird beta=gamma gewählt.

Aus oben genannten mathematischen Zusammenhängen ergeben sich die maximal möglichen Verhältnisse für D:d.

Bei der erfindungsgemäßen Vorrichtung erfolgt also beim Übergabevorgang des Materials von der abgebenden zur aufnehmenden Schnecke durch das Dehnen und Biegen (Umschichten) der viskosen Matrix ein Zerteilen der Feststoffteilchen-Agglomerate, wobei im wesentlichen durch die Anzahl der Ineinandergreifzonen, die Dauer der Beanspruchung und über die Kammbreite die Höhe der Beanspruchung, der das Material ausgesetzt ist, sehr fein durch die mechanischen Größen Einfluss auf die verfahrenstechnischen Erfordernisse genommen werden kann.

Durch die große am Bearbeitungsvorgang beteiligte Schneckenoberfläche und die dazu relativ kleine Materialmenge sind bei der erfindungsgemäßen Vorrichtung keine partiellen Überhitzungen oder sonstige Überlastungen des Materials zu erwarten, sondern eher eine gleichmäßige Belastung in den Ineinandergreifzonen. Dadurch erfolgt auch ein gleichmäßiger Energieumsatz im gesamten zu bearbeitenden Material bei geringem Verschleiß der Schnecken. Dazu kommt der entscheidende Vorteil, dass ein axiales, kurzschlüssiges Ausweichen von Teilen des Materialstroms verhindert wird, also Ausreißer nicht möglich sind.

Mit der erfindungsgemäßen Vorrichtung können beispielsweise nicht leitfähige Kunststoffe durch Dispergieren und Homogenisieren von Ruß mit einer Qualität leitfähig hergestellt werden, die bisher kaum mit Knetern erreichbar war. Ferner können Farben, Füllstoffe, Lebensmittel, wie Schokolade, homogenisiert und/oder dispergiert bzw. aufgeschlossen werden. Beispielsweise kann das zum Spinnen von Mikrofasern erforderliche Ausgangsmaterial hergestellt werden, d.h. ein spinnfähiger Kunststoff, dem Farbpigmente oder andere Feststoffe im μm- oder Nano-Bereich beigemischt sind. Diese Mikrofasern besitzen einen Durchmesser, der nur wenig größer als der Durchmesser der Farbpigmente oder sonstigen Feststoffteilchen ist.

Wenn die Feststoffaggregate nicht fein dispergiert und homogenisiert werden, verstopfen die Spinndüsen oder reißen die Fasern beim Spinnen. Weiterhin kann beispielsweise mit der erfindungsgemäßen Vorrichtung das Material für Kunststofffolien oder Schutzanstriche hergestellt werden. Da sich die erfindungsgemäße-Vorrichtung auch zum Homogenisieren von Kunststoffen mit sehr unterschiedlichen Polymerkettenlängen eignet, können mit ihr beispielsweise auch bi- oder multimodale Kunststoffe modifiziert werden.

Die Wellen der erfindungsgemäßen Vorrichtung können gleichsinnig angetrieben werden, sie können jedoch auch gegensinnig drehend ausgebildet sein.

Nachstehend ist eine Ausführungsform der erfindungsgemäßen Vorrichtung anhand der Zeichnung näher beschrieben.

Darin zeigen:

Fig. 1        einen Längsschnitt durch die Vorrichtung;

Fig. 2        einen Querschnitt der Vorrichtung entlang der Linie II-II in Figur 1;

Fig. 3       einen Querschnitt durch eine weitere Ausführungsform der Vorrichtung mit drei Wellen mit ineinandergreifenden Schneckenelementen in einem kreisbogenförmigen Schneckenraum im Gehäuse;

Fig. 4       eine der Fig. 3 entsprechende Ansicht ohne Gehäuse;

Fig. 5       eine der Fig. 4 entsprechende Ansicht, jedoch mit drei eingängigen Schneckenelementen;

Fig. 6 und 7       eine perspektivische Ansicht bzw. Draufsicht auf die drei Schneckenelemente nach Fig. 5; und

Fig. 8       eine der Fig. 1 entsprechende Seitenansicht der Schneckenwellen, jedoch mit eingängigen Schneckenelementen die in unterschiedlichen Axialbereichen unterschiedlich große Kammbreiten besitzen.

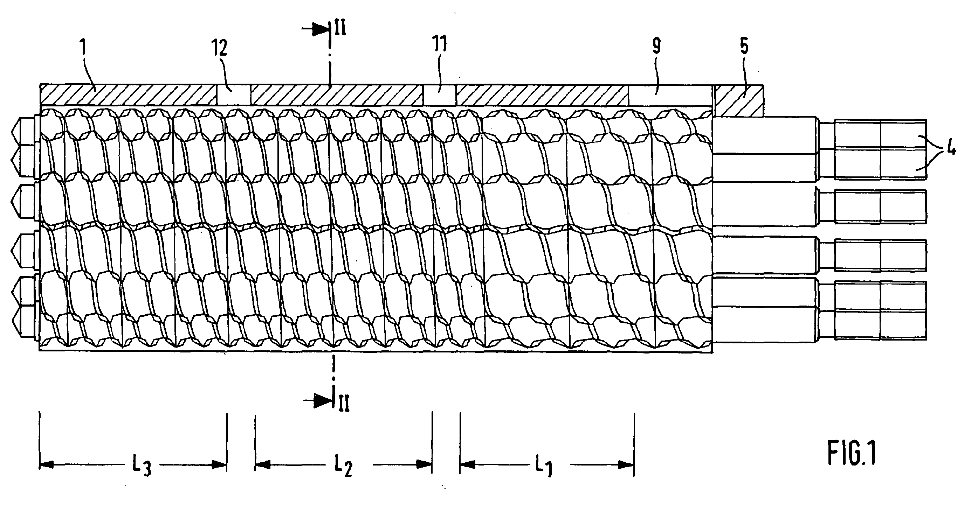

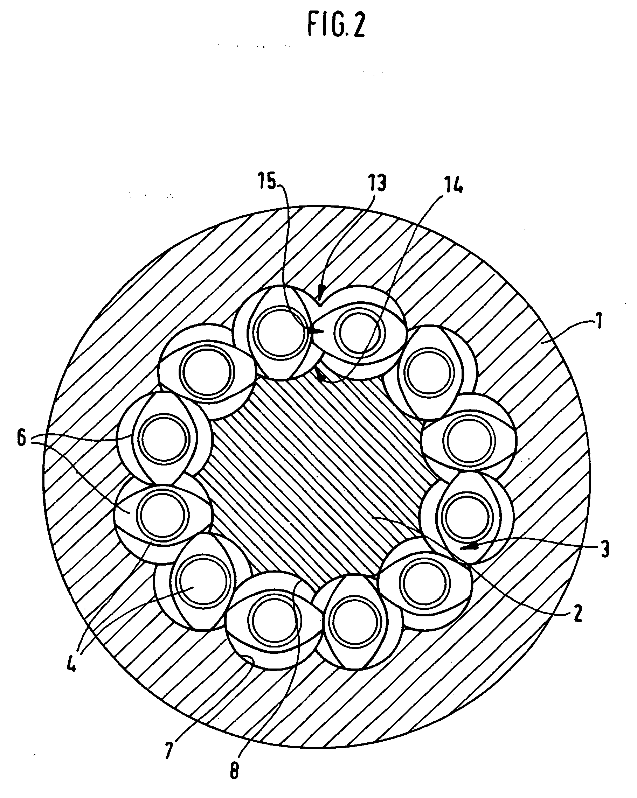

Gemäß Figur 1 und 2 weist die Vorrichtung ein Gehäuse 1 und einen axialen Innenkern 2 auf. Zwischen dem Gehäuse 1 und dem Innenkern 2 ist ein kreisringförmiger Schneckenraum 3 mit einer Vielzahl achsparallel angeordneter Wellen 4 vorgesehen.

Das Gehäuse 1 ist eingangsseitig durch eine Endplatte 5 verschlossen, durch die sich die Wellen 4 erstrecken, die durch ein nicht dargestelltes Getriebe gleichsinnig oder gegensinnig angetrieben werden. Auf jeder Welle 4 ist drehfest eine Vielzahl von zweigängigen Schneckenelementen 6 angeordnet.

Wie Figur 2 zu entnehmen ist, greifen die Schneckenelemente 6 benachbarter Wellen 4 kämmend mit geringem Spiel, also weitgehend dicht ineinander.

Das Gehäuse 1 ist an der Innenseite und der Kern 2 an seiner Außenseite mit achsparallelen konkaven Kreissegmenten 7 bzw. 8 versehen. Im Querschnitt sind die Innenseite des Gehäuses 1 und der Innenkern 2 damit rosettenförmig aus konzentrischen Kreissegmenten 7 und 8 gebildet, deren Kreismittelpunkt in der Zylinderfläche des Kreises liegt, auf dem sich die Achsen der Wellen 4 befinden. In die Kreissegmente 7, 8 greifen die Schneckenelemente 6 mit geringem Spiel, also weitgehend dicht ein.

An dem einen, der Endplatte 5 zugewandten eingangseitigen Ende weist das Gehäuse 1 an der Oberseite eine Öffnung 9 auf, durch die das (nicht dargestellte) zu bearbeitende Material dem Schneckenraum 3 zugeführt wird.

Die aus dem Material austretenden Gase strömen durch die Öffnungen 11, 12 in dem Gehäuse 1 nach außen. Diese Öffnungen können z.B. auch im Innenkern 2 vorgesehen sein, wenn er hohl ausgebildet ist.

Die Wellen 4 erstrecken sich in dem Bereich, der außerhalb der Öffnungen 9, 11, 12 liegt, über eine Länge, die z.B. dem Zwanzigfachen des Außendurchmessers D der Schneckenelemente 6 entspricht.

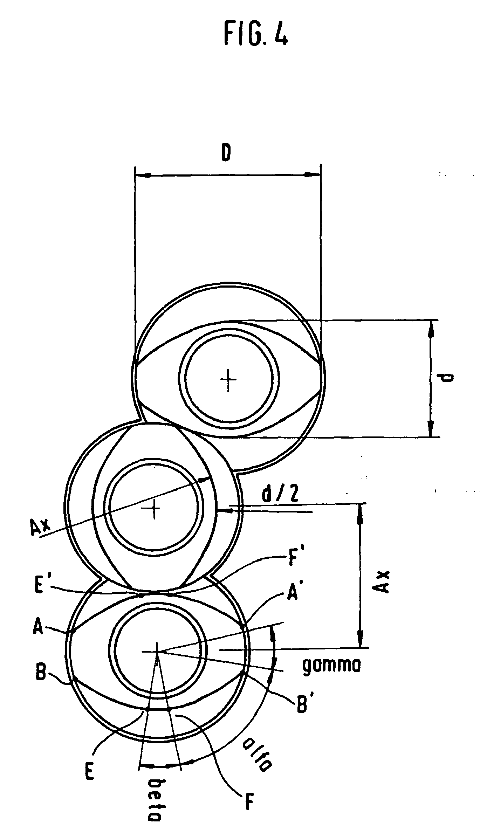

Gemäß Figur 2, 3 und 4 weisen die Schneckenelemente 6 im Querschnitt eine ellipsenartige Kontur auf, die im Bereich der Bögen A, B und A', B' eine Krümmung aufweist, die D/2 entspricht, und im Bereich E, F und E', F' eine Krümmung, die $A_x - \frac{1}{2} D$ entspricht, wobei $A_x$ der axiale Abstand zwischen zwei Wellen bedeutet. Die Winkel α, β und y die Krümmungen der Bereiche zwischen B und E, F und B' sowie A, E' und F', A' können durch bekannte Verfahren der analytischen Geometrie bestimmt werden, wie z.B. in EP 0 002 131 B1 beschrieben.

Gemäß Figur 2 weist die Vorrichtung durch die zwölf Wellen 4 insgesamt 24 Zwickel, 13, 14 oder Übergänge auf, an denen sich die konkaven Kreissegmente 7 an der Innenseite des Gehäuses 1 bzw. die konkaven Kreissegmente 8 an der Außenseite des Schneckenraumes 3 schneiden. Zwischen den beiden Übergängen 13, 14 befinden sich die Zonen 15, in denen die Schneckenelemente 6 benachbarter Wellen 4 dicht kämmend ineinandergreifen. Bei einer Gangsteigung von ½ D werden damit auf einer Schneckenlänge L, die sich aus den Schneckenlängen L1 zwischen der Materialzufuhröffnung 9 und der Entgasungsöffnung 11, der Schneckenlänge L2, zwischen den beiden Entgasungsöffnungen 11 und 12 und der Schneckenlänge L3 zwischen der Entgasungsöffnung 12 und dem materialaustrittsseitigen Ende der Wellen 4 zusammensetzt, bei L = 20 D, insgesamt 960 Ineinandergreifzonen 15 gebildet.

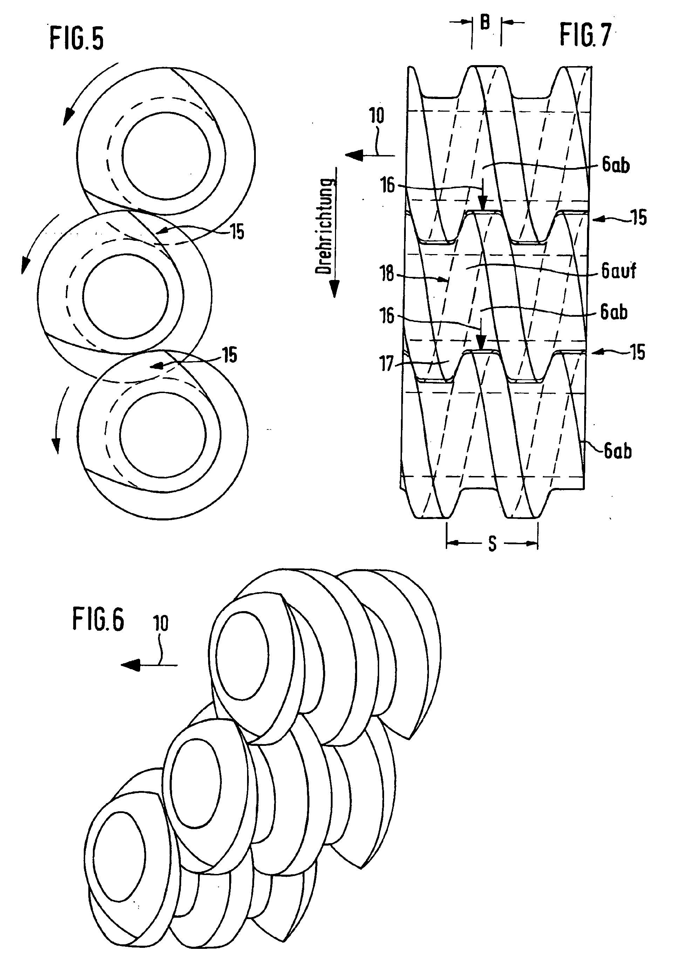

Die Wirkung der Ineinandergreifzonen 15 auf das Dispergieren und Homogenisieren eines Feststoffes bzw. der anderen Stoffanteile in einer viskosen Matrix ist anhand der Figuren 5 bis 7 näher erläutert, die drei ineinander greifende eingängige Schneckenelemente mit einer Gangsteigung S zeigen. Die Schneckenförderrichtung ist durch den Pfeil 10 wiedergegeben. Damit die (rechtssteigenden) Schnecken gemäß dem Pfeil 10 fördern, weisen sie die in Fig. 7 dargestellte Drehrichtung auf.

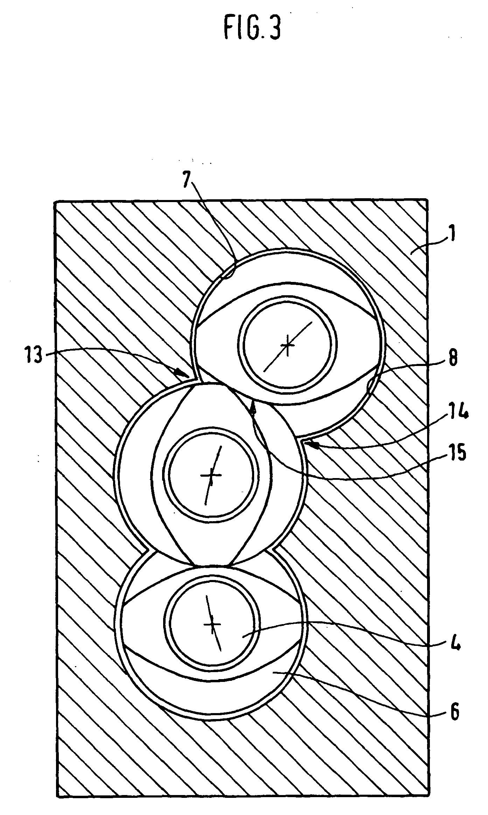

Das Material, das sich in Richtung des Pfeiles 16 bewegt, ist im Bereich der durch die konkaven Kreissemente 7 und 8 (Fig. 3)gebildeten Kammer 18 dem bremsenden Einfluss des Gehäuses 1 ausgesetzt. Die Wirkung der Ineinandergreifzonen 15 auf das Dispergieren und Homogenisieren eines Feststoffes bzw. der anderen Stoffanteile in einer viskosen Matrix beruht nun im wesentlichen darauf, dass beim Durchströmen des Materials durch die Ineinandergreifzonen 15 dieser bremsende Einfluss des Gehäuses 1 im wesentlichen entfällt, was gleichzeitig mit einer Vergrößerung der Materialgeschwindigkeiten verbunden ist und eine Dehnung des beteiligten Materials zur Folge hat. Weiter wird beim Auftreffen des Materials auf den Außendurchmesser des Kammes K der aufnehmenden Schnecke $6_{auf}$, welcher mit Umfangsgeschwindigkeit rotiert, ähnlich wie beim Pflügen, das Material von der Schneckenoberfläche der abgebenden Schnecke $6_{ab}$ abgetragen, umgeschichtet und mit neuer Fließrichtung in den verengten Querschnitt bei 17 gelenkt.

Über die Viskosität der kontinuierlichen Phase werden dadurch Zug- und Biegekräfte auf die in der Matrix enthaltenen benetzten Feststoffagglomerate ausgeübt, sodass es zu deren Bruch kommen kann.

In Fig. 7 ist die Kammer 18 gut zu sehen, wobei die aufnehmende Seite $6_{auf}$ oben und die abgebende Seite $6_{ab}$ unten dargestellt ist, mit maximal möglicher Kammbreite B. Wird B kleiner gemacht, werden die aufnehmende und die abgebende Durchtrittsfläche gleichzeitig größer und damit der Übergabewiderstand kleiner.

Durch die Änderung der Kammbreite B kann damit die Funktion beeinflusst werden. Bei Erhöhung der Steigung S, z.B. bei doppelter Steigung, wird ein erhöhter bzw. doppelter Durchsatz erreicht.

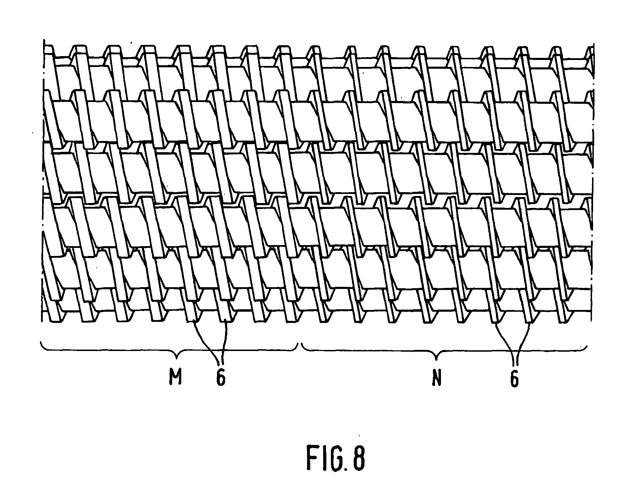

Gemäß Fig. 8 weisen die eingängigen Schneckenelemente 6 im Axialbereich M eine größere Kammbreite K als die Schneckenelemente 6 im Axialbereich N der Vorrichtung auf. Die Schneckenelemente 6 mit der größeren Kammbreite K können dabei materialausgangsseitig und die Schneckenelemente 6 mit der kleineren Kammbreite K materialeingangsseitig angeordnet sein. Es ist jedoch auch möglich, die Schneckenelemente mit der größeren Kammbreite materialeingangsseitig und die Schneckenelemente 6 mit der kleineren Kammbreite materialausgangsseitig anzuordnen. Auch ist es möglich, abwechselnd Axialbereiche mit Schneckenelementen mit größerer Kammbreite und Axialbereiche mit Schneckenelementen mit kleiner Kammbreite vorzusehen.

Durch die unterschiedliche Kammbreite kann der Strömungswiderstand in den Ineinandergreifzonen gesteuert werden. Je größer die Kammbreite ist, umso größer ist der Widerstand beim Eintritt in diese Zonen.

Beispiel

Mit einer erfindungsgemäßen Vorrichtung mit 12 Wellen, und einer mit Schmelze gefüllten Verfahrenslänge von 23 D (D = Außendurchmesser der Schneckenelemente), wovon 10,5 D Verfahrenslänge mit einer Schnecke von 2/3 D Steigung oder kleiner besetzt war, wurde ein Polymer mit 25 Gew.-% Ruß homogenisiert. Das gebildete Granulat wurde einer optischen Messung unterzogen. Es ist eine absolute Dispersion festgestellt worden, bei einer Teilchengröße von < 5 $\mu$m. Bislang konnte diese Qualität nur in einem mehrstufigen Verfahren auf Chargenkneter erreicht werden.

**Patentansprüche**

1. Vorrichtung zum Homogenisieren und/oder Dispergieren wenigstens eines viskosen Stoffes und wenigstens eines Feststoffes und/oder wenigstens eines anderen Stoffes unterschiedlicher Viskosität, mit mindestens drei in einem Schneckenraum in einem Gehäuse längs eines Kreises mit gleichen Zentriwinkelabstand angeordneten achsparallelen rotierbaren Wellen, die zumindest teilweise mit dicht kämmend ineinandergreifenden Schneckenelementen versehen sind, wobei das Gehäuse an der radial außen- und innenliegenden Seite des Schneckenraumes mit achsparallelen konkaven die jeweilige Welle aufnehmenden Kreissegmenten und mit Öffnungen in den Schneckenraum versehen ist, **dadurch gekennzeichnet, dass** die Wellen (4) in dem Bereich außerhalb der Öffnungen (9, 11, 12) über eine Länge (L=L1+L2+L3), die wenigstens dem Zehnfachen des Außendurchmessers (D) der Schneckenelemente (6) entspricht, mit Schneckenelementen (6) versehen sind, die über eine Länge von wenigstens dem Dreifachen des Außendurchmessers (D) der Schneckenelemente (6) eine Gangsteigung (S) von höchstens drei Viertel des Schneckenaußendurchmessers (D) aufweisen.

2. Vorrichtung nach Anspruch 1, **dadurch gekennzeichnet, dass** die Gangsteigung (S) höchstens zwei Drittel des Schneckenaußendurchmessers (D) beträgt.

3. Vorrrichtung nach Anspruch 1 oder 2, **dadurch gekennzeichnet, dass** die Schneckenelemente (6) eingängig ausgeführt sind.

4. Vorrichtung nach einem der vorstehenden Ansprüche, **dadurch gekennzeichnet, dass** die Schneckenelemente (6) im Querschnitt eine ellipsenartige Kontur aufweisen, wobei die Krümmung im Bereich der Hauptachse (A, B, A', B') dem halben Schneckenaußendurchmesser (D) und im Bereich der Nebenscheitel (E, F, E', F') dem axialen Abstand (Ax) zweier Wellen (4) minus dem halben Schneckenaußendurchmesser (D) entspricht.

5. Vorrichtung nach Anspruch 3, **dadurch gekennzeichnet, dass** die Kammbreite (K) der Schneckenelemente (6) bei konstanter Gangsteigung (S) in einzelnen Axialbereichen (M, N) unterschiedlich ist.

**Claims**

1. An apparatus for homogenizing and/or dispersing at least one viscous substance and at least one solid and/or at least one other substance of different viscosity, having at least three axis-parallel rotatable shafts disposed in a screw space in a housing along a circle with equal central-angle distance and provided at least partly with tightly intermeshing screw elements, the housing being provided on the radially external and internal sides of the screw space with axis-parallel concave circular segments receiving the particular shaft and with openings into the screw space, **characterized in that** the shafts (4) are provided in the area outside the openings (9, 11, 12) over a length (L=L1+L2+L3) corresponding to at least ten times the outside diameter (D) of the screw elements (6) with screw elements (6) having a pitch (S) of at most three quarters of the outside screw diameter (D) over a length of at least three times the outside diameter (D) of the screw elements (6).

2.  An apparatus according to claim 1, **characterized in that** the pitch (S) amounts to at most two thirds of the outside screw diameter (D).

3.  An apparatus according to claim 1 or 2, **characterized in that** the screw elements (6) are of single-flighted design.

4.  An apparatus according to any of the above claims, **characterized in that** the screw elements (6) have an elliptical contour in cross section, the curvature in the area of the major axis (A, B, A', B') corresponding to half the outside screw diameter (D) and in the area of the minor vertices (E, F, E', F') to the axial distance (Ax) of two shafts (4) minus half the outside screw diameter (D).

5.  An apparatus according to claim 3, **characterized in that** the flight width (K) of the screw elements (6) is different in individual axial areas (M, N) at constant pitch (S).


**Revendications**

1.  Dispositif pour homogénéiser et/ou disperser au moins une matière visqueuse et au moins une matière solide et/ou au moins une autre matière de viscosité différente, comportant au moins trois arbres rotatifs parallèles à l'axe, agencés avec la même distance d'angle au centre dans un espace à vis sans fin dans un boîtier le long d'un cercle, arbres qui sont pourvus au moins partiellement d'éléments à vis sans fin s'engrenant de manière serrée, et sur le côté situé radialement à l'extérieur et à l'intérieur, de l'espace à vis sans fin, le boîtier étant pourvu de segments concaves de cercle parallèles à l'axe, recevant l'arbre respectif et d'ouvertures dans l'espace à vis sans fin, **caractérisé en ce que** dans la région à l'extérieur des ouvertures (9, 11, 12) sur une longueur (L=L1+L2+L3), qui correspond au moins à dix fois le diamètre extérieur (D) des éléments à vis sans fin (6), les arbres (4) sont pourvus d'éléments à vis sans fin (6) qui présentent, sur une longueur d'au moins le triple du diamètre extérieur (D) des éléments à vis sans fin (6), un pas de spire (S) d'au plus trois quarts du diamètre extérieur de vis sans fin (D).

2.  Dispositif selon la revendication 1, **caractérisé en ce que** le pas de spire (S) est au plus de deux tiers du diamètre extérieur de vis sans fin (D).

3.  Dispositif selon la revendication 1 ou 2, **caractérisé en ce que** les éléments à vis sans fin (6) sont réalisés à pas simple.

4.  Dispositif selon l'une des revendications précédentes, **caractérisé en ce que** les éléments à vis sans fin (6) présentent en section transversale un contour en forme d'ellipse, la courbure dans la région de l'axe principal (A, B, A', B') correspondant au demi diamètre extérieur de vis sans fin (D), et la courbure dans la région du sommet secondaire (E, F, E', F'), correspondant à la distance axiale (Ax) de deux arbres (4) moins le demi diamètre extérieur de la vis sans fin (D).

5.  Dispositif selon la revendication 3, **caractérisé en ce que** la largeur de peigne (K) des éléments à vis sans fin (6) est différente dans des régions axiales (M, N) individuelles pour un pas de spire (S) constant.

FIG.1

# FIG. 2

# FIG.3

# FIG. 4

FIG.5

FIG.7

FIG.6

10

FIG. 8